**Europäisches Patentamt**

**European Patent Office**

**Office européen des brevets**

(19)

(11) Veröffentlichungsnummer: **0 015 009**
**B1**

(12) **EUROPÄISCHE PATENTSCHRIFT**

(45) Veröffentlichungstag der Patentschrift:
08.12.82

(51) Int. Cl.³: **B 23 Q 5/26**

(21) Anmeldenummer: **80200011.7**

(22) Anmeldetag: **07.01.80**

(54) **Steuereinrichtung zum Steuern einer Vorschubbewegung in einer Verzahnungsmaschine.**

(30) Priorität: **24.01.79 CH 704/79**

(43) Veröffentlichungstag der Anmeldung:
**03.09.80 Patentblatt 80/18**

(45) Bekanntmachung des Hinweises auf die Patenterteilung:
**08.12.82 Patentblatt 82/49**

(84) Benannte Vertragsstaaten:
**CH DE FR GB IT SE**

(56) Entgegenhaltungen:
**FR-A-1 426 102**

(73) Patentinhaber: **Werkzeugmaschinenfabrik Oerlikon-Bührle AG, Birchstrasse 155, CH-8050 Zürich (CH)**

(72) Erfinder: **Kistler, Viktor, Ing. HTL, im Sunnebüel 7, CH-8800 Thalwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Steuereinrichtung zum Steuern einer Vorschubbewegung in einer Verzahnungsmaschine

Die Erfindung betrifft eine Steuereinrichtung zum Steuern einer Vorschubbewegung eines Werkzeuges relativ zu einem Werkstück in einer, nach einem kontinuierlichen Schneidverfahren arbeitenden Verzahnungsmaschine, mit einem Antrieb für das Werkzeug und das Werkstück und einem hydraulischen Wegeventil mit Schieber, welches die Zufuhr von Druckflüssigkeit zu einem Vorschubkolben steuert, wobei durch die Vorschubbewegung eine an einem Steuerkurventräger einzustellende Bereitstellungsstrecke sowie eine durch die Steuerkurve vorgegebene Bearbeitungsstrecke zurückgelegt werden.

Steuereinrichtungen zum Steuern der Vorschubbewegung eines Werkzeuges in einer Verzahnungsmaschine sorgen dafür, daß das Werkzeug über eine Bereitstellungsstrecke hinweg relativ schnell und über eine Bearbeitungsstrecke dagegen sehr langsam gegen das Werkstück bewegt wird.

Es sind Steuereinrichtungen gemäß dem Oberbegriff des Patentanspruches bekannt, bei denen die Länge der Bereitstellungsstrecke eingestellt werden muß. Diese Einstellung ist für jedes neu eingesetzte Werkzeug oder Werkstück neu vorzunehmen und hängt ab vom Abstand zwischen Werkzeug und Werkstück in einer Ausgangsstellung.

Diese Einstellung wird an der Steuereinrichtung vorgenommen, indem in der Ausgangsstellung dieser Abstand auch zwischen einer Steuerkurve und einer Tastrolle eingestellt wird.

Wird nun aus irgendwelchen Gründen dieser Abstand zwischen Werkzeug und Werkstück in der Steuereinrichtung falsch eingestellt, so können an der Verzahnungsmaschine sowie an Werkzeug und Werkstück größere Schäden auftreten, indem das rotierende Werkzeug noch während der Bereitstellungsstrrecke in das ebenfalls rotierende Werkstück dringt. Dies bewirkt im hydraulisch arbeitenden Teil der Steuereinrichtung einen starken Druckanstieg. Die so entstehenden hohen Kräfte zwischen Werkzeug und Werkstück führen zu deren Beschädigung bzw. Zerstörung. Zusätzlich sind auch Schäden an den Lagern und Führungen der bewegten Teile der Maschine möglich, deren Behebung sehr kostspielig ist.

Aufgabe der Erfindung ist es, Schäden an Werkstück, Werkzeug und Maschine zu vermeiden, die bei Eingabe einer zu langen Bereitstellungsstrecke in die Steuereinrichtung auftreten. Erfindungsgemäß wird dies erreicht durch einen, durch den Schieber eines Wegeventils betätigten Schalter zum Ein- bzw. Ausschalten des Antriebs des Werkzeuges und des Werkstückes sowie durch einen Druckbegrenzer, der aus- bzw. eingeschaltet ist, während Werkzeug oder Werkstück die Bearbeitungs- bzw. Bereitstellungsstrecke durchlaufen.

Der Vorteil der erfindungsgemäßen Lösung besteht darin, daß der Antrieb für Werkzeug und Werkstück beim Auftreffen des Werkzeuges auf das Werkstück ausgeschaltet bleibt, wenn eine zu lange Bereitstellungsstrecke in die Steuereinrichtung eingegeben wurde. Dabei geschieht dieses Auftreffen des Werkzeuges auf das Werkstück mit geringer Kraft.

Ein Ausführungsbeispiel der Erfindung ist in den Zeichnungen dargestellt und im folgenden näher beschrieben. Es zeigt:

Fig. 1 eine Verzahnungsmaschine in Seitenansicht;

Fig. 2 eine Steuereinrichtung der Verzahnungsmaschine schematisch dargestellt für einen Betriebszustand;

Fig. 3 und 4 weitere Betriebszustände der Steuereinrichtung gemäß Fig. 2.

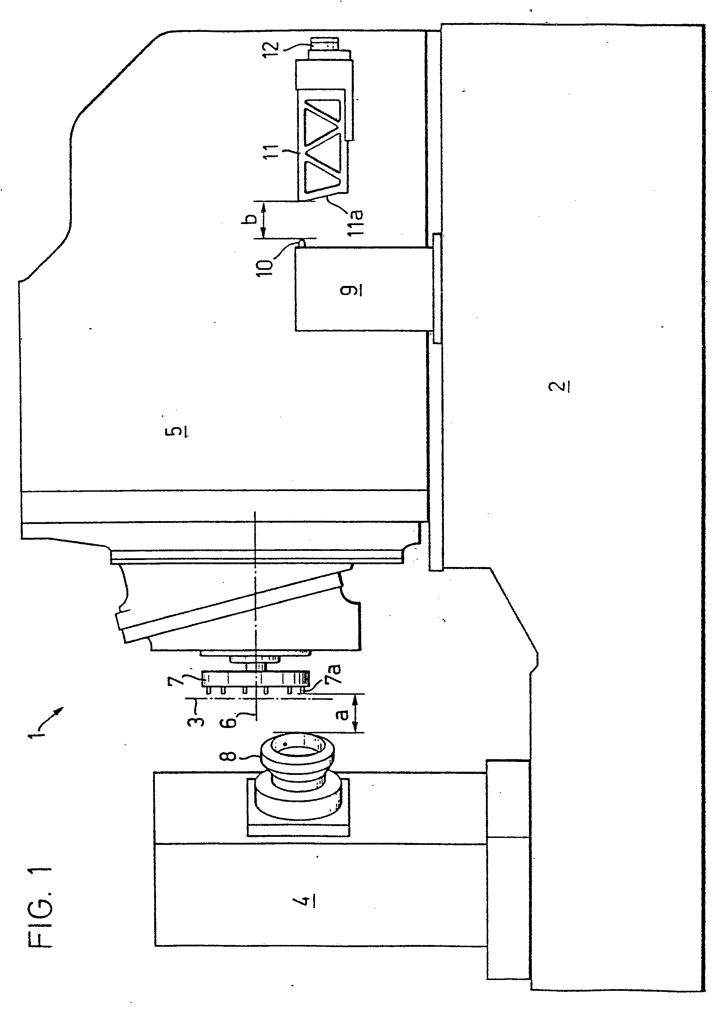

In Fig. 1 erkennt man eine an sich bekannte Verzahnungsmaschine 1, welche ein Maschinenbett 2, einen um eine vertikale Achse 3 schwenkbaren Spindelstock 4 sowie einen Wälzstock 5 aufweist. Dieser ist auf dem Maschinenbett 2 in Richtung einer horizontalen Achse 6 verschiebbar gelagert. Ein Werkzeug 7 ist drehbar im Wälzstock 5 gelagert. Dabei handelt es sich in diesem Beispiel um einen mit mehreren Messern 7a bestückten Messerkopf. Im Spindelstock 4 ist das Werkstück 8 ebenfalls drehbar gelagert und besteht in diesem Beispiel aus einem Kegelradrohling.

Neben dem Wälzstock 5 ist auf dem Maschinenbett 2 ein Aufsatz 9 angeordnet, von dem eine Tastrolle 10 vorsteht. Ein Steuerkurventräger 11 mit einer Steuerkurve 11a ist auf dem Wälzstock 5 horizontal über ein Handrad 12 und zusätzlich in nicht näher dargestellter Art vertikal verschiebbar angeordnet.

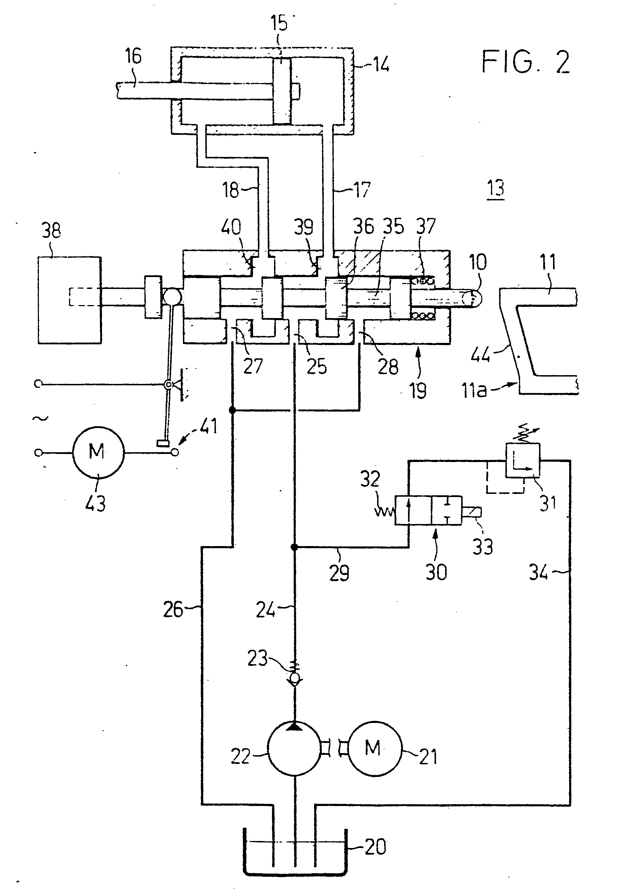

In Fig. 2 erkennt man eine Steuereinrichtung 13, welche die Bewegung eines Vorschubkolbens 15 steuert. Dieser ist in einem Zylinder 14 hin- und herbewegbar, welcher in nicht näher dargestellter Weise am Maschinenbett 2 befestigt ist. Eine Kolbenstange 16 verbindet den Vorschubkolben 15 in ebenfalls nicht näher dargestellter Weise mit dem Wälzstock 5. Zwei Leitungen 17, 18 verbinden den Zylinder 14 mit einem Wegeventil 19. Dieses steuert Druckflüssigkeit zu den Leitungen 17 und 18. Diese Druckflüssigkeit wird von einem Behälter 20 über eine, von einem Motor 21 angetriebene Pumpe 22, ein Rückschlagventil 23 und Leitungen 24 einem Eingang 25 im Wegeventil 19 zugeführt. Eine Leitung 26 verbindet Ausgänge 27, 28 des Wegeventils 19 mit dem Behälter 20. Eine Zweigleitung 29 verbindet die Leitung 24 über ein Wegeventil 30 mit einem Druckbegrenzer 31. Das Wegeventil 30 wird durch eine Feder 32 oder einen Magneten 33 in der gewünschten Stellung gehalten. Eine Leitung 34 verbindet den Druckbegrenzer 31 mit dem Behälter 20.

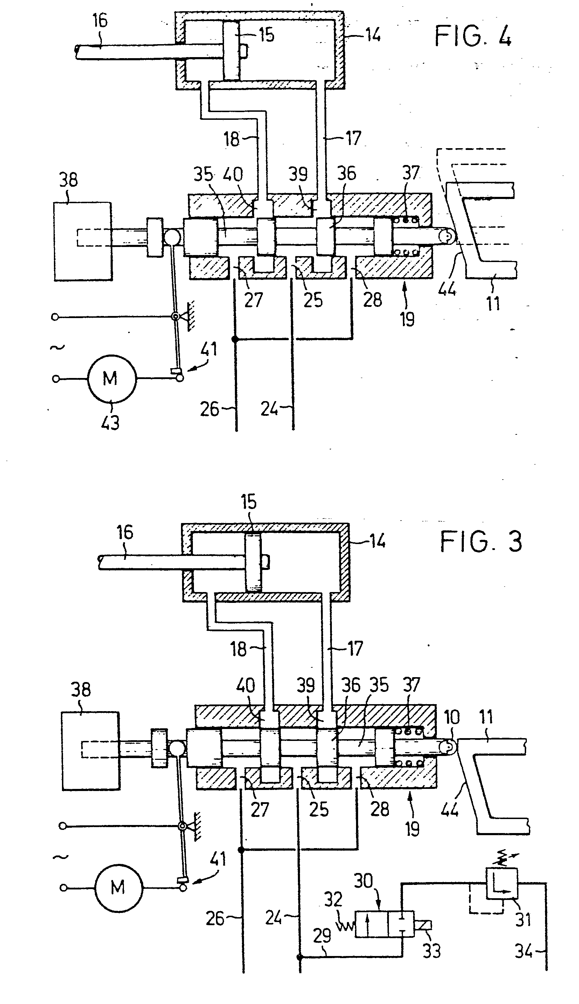

Das Wegeventil 19 enthält einen Schieber 35, der mehrere Kolben 36 trägt und von einer Feder 37 in die eine, und von einem Magneten 38 in die andere Richtung bewegt werden kann. Die Kolben 36 des Schiebers 35 können Ausgänge 39 und 40 des Wegeventils 19 sperren oder freigeben. Wird der Schieber 35 von der Feder 37 aus einer Mittelstellung gemäß Fig. 3 nach links verschoben, so ist der Eingang 25 mit dem Ausgang 40 und der Ausgang 39 mit dem Ausgang 28 verbunden. Wird aber der Schieber 35 durch den Magneten 38 nach rechts (Fig. 2) verschoben, so ist Eingang 25 mit Ausgang 39 und Ausgang 40 mit Ausgang 27 verbunden. Das dem Magneten 38 abgewandte Ende des Schiebers 35 trägt die Tastrolle 10, welche zum Abtasten der Steuerkurve 11a dient. Durch den Schieber 35 wird außerdem ein elektrischer Schalter 41 betätigt. Dieser öffnet oder schließt den Stromkreis für einen Antrieb 43, beispielsweise einen Elektromotor, für das Werkzeug 7 und das Werkstück 8.

Wirkungsweise

In einer Ausgangsstellung befindet sich der Wälzstock 5 in der in Fig. 1 gezeichneten Stellung. Der horizontale Abstand a zwischen Werkzeug 7 und Werkstück 8 wird als Abstand b durch Drehen am Handrad 12 auch zwischen Tastrolle 10 und Steuerkurve 11a eingestellt. Dabei befindet sich der Steuerkurventräger 11 in seiner unteren Endstellung gemäß Fig. 1 und 2. In der Steuereinrichtung 13 wird Druckflüssigkeit aus dem Behälter 20 über die, vom Motor 21 angetriebene Pumpe 22, das Rückschlagventil 23, Leitung 24, Zweigleitung 29, Wegeventil 30 und den Druckbegrenzer 31 geleitet und wieder dem Behälter 20 zugeführt. Dabei befindet sich das Wegeventil 30, bei ausgeschaltetem Magneten 33, in der in Fig. 2 gezeigten Stellung.

Durch Einschalten des Magneten 38 wird der Schieber 35 wie in Fig. 2 ersichtlich nach rechts geschoben. Da die Kolben 36 die Ausgänge 39 und 40 freigeben, kann die Druckflüssigkeit aus der Leitung 24 in die Leitung 17 und somit auf der rechten Seite des Kolbens 15 in den Zylinder 14 fließen. Auf der linken Seite des Kolbens 15 fließt Druckflüssigkeit über Leitung 18, die Ausgänge 40 und 27 sowie Leitung 26 in den Behälter 20. Dadurch wird der Kolben 15 und somit der Wälzstock 5 nach links gegen das Werkstück 8 bewegt. Dabei ist der Druckbegrenzer 31 so eingestellt, daß der Druck in der Steuereinrichtung 13 und somit auch im Zylinder 14 gerade ausreicht, um den Wälzstock 5 zu bewegen. Durch die Bewegung des Wälzstockes 5 gegen den Spindelstock 4 nähert sich die Steuerkurve 11a der Tastrolle 10. Hat die Steuerkurve 11a die Tastrolle 10 erreicht, beginnt sie diese und somit den Schieber 35 mit den Kolben 36 nach links zu schieben. Hat der Schieber 35 jene Stellung (Fig. 3) erreicht, in der die Kolben 36 beide Ausgänge 39 und 40 schließen, so hat das Werkzeug 7 die Bereitstellungsstrecke zurückgelegt. Der Kolben 15 kann sich nicht mehr bewegen, da die Leitungen 17 und 18 abgesperrt sind. Somit ist der Wälzstock 5 zum Stillstand gekommen und die Steuerkurve 11a kann den Schieber 35 nicht weiter bewegen, weil sie mit dem Wälzstock 5 und somit mit dem Vorschubkolben 15 verbunden ist.

Kurz vor Erreichen der Schieberstellung gemäß Fig. 3 wurde durch den Schalter 41 der Stromkreis geschlossen und somit der Antrieb 43 für das Werkzeug 7 eingeschaltet.

In der Schieberstellung gemäß Fig. 3 wird auch der Magnet 33 in nicht näher dargestellter Weise betätigt, so daß das Wegeventil 30 umschaltet und so Leitung 29 sperrt. In der Steuereinrichtung 13 kann sich nun ein höherer Druck aufbauen, da der Druckbegrenzer 31 unwirksam wird. Gleichzeitig beginnt nun der Steuerkurventräger 11 mit der Steuerkurve 11a, sich am Wälzstock 5 langsam nach oben zu bewegen. Sobald sich die Steuerkurve 11a so weit nach oben verschoben hat, daß die Tastrolle 10 auf eine geneigte Fläche 44 stößt, kann sich der Schieber 35 unter der Wirkung des Magneten 38 gegen die Feder 37 nach rechts verschieben, wie aus Fig. 4 ersichtlich. Dadurch ist es wieder möglich, daß Druckflüssigkeit aus der Leitung 24 über den Eingang 25, den Ausgang 39 und Leitung 17 auf der einen Seite des Kolbens 15 in den Zylinder 14 fließt. Andererseits aber auch Druckflüssigkeit von der anderen Seite des Kolbens 15 aus dem Zylinder 14 über Leitung 18, die Ausgänge 40 und 27 und über Leitung 26 in den Behälter 20 gelangt. Damit kann nun das Werkzeug 7 die Bearbeitungsstrecke durchlaufen und es beginnt das Werkstück 8 zu bearbeiten, wozu auch der oben erwähnte höhere Druck im Steuersystem 13 für den Vorschub des Wälzstockes 5 nötig ist.

Ein Vergleich von Fig. 2 und 4 ergibt, daß während das Werkzeug 7 die Bearbeitungsstrecke zurücklegt (Fig. 4), die Kolben 36 nur noch einen kleinen Durchgang für die Druckflüssigkeit offen halten und der Stromkreis durch den Schalter 41 geschlossen bleibt. Die Neigung der Fläche 44 der Steuerkurve 11a, die Geschwindigkeit der Aufwärtsbewegung der Steuerkurve 11a, sowie die durch diese beiden Größen beeinflußte Vorschubgeschwindigkeit des Wälzstockes 5 sind so aufeinander abgestimmt, daß sich eine geringe Vorschubgeschwindigkeit ergibt.

Ist der Abstand a zwischen Werkzeug 7 und Werkstück 8 kleiner als der Abstand b zwischen Tastrolle 10 und Steuerkurve 11a, so erreicht beim Vorschub das Werkzeug 7 das Werkstück 8, bevor es die Bereitstellungsstrecke zurückgelegt hat. Der Wälzstock 5 und entsprechend der Kolben 15 werden durch die Berührung von Werkstück 8 und Werkzeug 7 angehalten. Da die ganze Steuereinrichtung 13 bei tiefem, begrenztem Druck arbeitet, führt dies zu keiner Beschädigung von Werkzeug 7 oder Werkstück 8. Der Antrieb 43 für das Werkzeug 7 und das Werkstück 8 ist nicht eingeschaltet, da der Schieber 35 von der Steuerkurve 11a nicht nach links verschoben wurde und in seiner in Fig. 2 gezeigten Stellung verharrt.

Hat die Steuerkurve 11a ihre obere Endstellung (in Fig. 4 gestrichelt gezeichnet) erreicht, so ist die Vorschubbewegung abgeschlossen. Der Magnet 38 wird nun ausgeschaltet und der Schieber 35 wird durch die Feder 37 in eine hier nicht näher dargestellte Stellung gebracht, in welcher Druckflüssigkeit aus Leitung 24 über Eingang 25, Ausgang 40 und Leitung 18 in den Zylinder 14 gelangt. Der Kolben 15 und somit auch Wälzstock 5 tritt nun seinen Rückhub an und die verdrängte Druckflüssigkeit gelangt über Leitung 17, die Ausgänge 39 und 28 sowie Leitung 26 in den Behälter 20.

Selbstverständlich kann der erfindungsgemäße Druckbegrenzer 31 auch anders ausgebildet sein, beispielsweise als durch einen Druckschalter betätigbares Zweiwegeventil oder Auf-Zu-Ventil. Eine weitere Möglichkeit besteht darin, den Druckbegrenzer als Druckschalter auszubilden, der bei Erreichen eines bestimmten Druckes in der Steuereinrichtung 13 den Magneten 38 ausschaltet, wodurch der Schieber 35 durch die Feder 37 nach links verschoben wird. Natürlich kann der Schieber 35 statt durch den Magneten 38 auch durch einen Kolben unter Öldruck gegen die Feder 37 verschoben werden.

## Patentanspruch

Steuereinrichtung zum Steuern einer Vorschubbewegung eines Werkzeuges (7) relativ zu einem Werkstück (8) in einer, nach einem kontinuierlichen Schneidverfahren arbeitenden Verzahnungsmaschine (1), mit einem Antrieb (43) für das Werkzeug (7) und das Werkstück (8) und einem hydraulischen Wegeventil (19) mit Schieber (35), welches die Zufuhr von Druckflüssigkeit zu einem Vorschubkolben (15) steuert, wobei durch die Vorschubbewegung eine an einem Steuerkurventräger (11) einzustellende Bereitstellungsstrecke (b) sowie eine durch die Steuerkurve (11a) vorgegebene Bearbeitungsstrecke zurückgelegt werden, gekennzeichnet durch einen, durch den Schieber (35) betätigten Schalter (41) zum Ausschalten des Antriebs (43) während der Bereitstellungsstrecke (b) und zum Einschalten des Antriebs (43) während der Bearbeitungsstrecke sowie durch einen Druckbegrenzer (31), der während der Bereitstellungsstrecke zugeschaltet und während der Bearbeitungsstrecke ausgeschaltet ist.

## Claim

Control apparatus for controlling a feed movement of a tool (7) relative to a workpiece (8) in a gear cutting machine (1) working according to a continuous cutting process comprising a drive (43) for driving the tool (7) and the workpiece (8), a hydraulic directional control valve (19) containing a displaceable spool (35), the spool (35) controlling the infeed of pressurized fluid medium to a feed piston (15), so that by means of the feed movement of the feed piston (15) there can be accomplished movement through the preparatory path (b) regulated by a control cam support (11) and through a machining path regulated by a control cam (11a), characterised by a switch (41), actuated by the spool (35) for turning-off the drive (43) during the preparatoy path (b) and for turning-on the drive (43) during the machining path, as by a pressure limiter (31) which is turned on during the preparatory path and which is tured-off during the machining path.

## Revendication

Installation de commande pour commander un mouvement d'avance d'un outil (7) par rapport à une pièce (8) dans une machine (1) à tailler les engrenages, travaillant selon un procédé de coupe en continu, avec un moteur (43) pour l'outil (7) et la pièce (8) et une vanne hydraulique (19) à tiroir (35) qui commande l'alimentation du liquide hydraulic vers un piston d'avance (15) où au cours du mouvement d'avance, on parcourt un chemin de mise en position préparatoire (b) qui se règle sur un support de courbe de commande (11), ainsi qu'un chemin de travail prédéterminé par la courbe de commande (11a), installation caractérisée par un commutateur (41) actionné par le tiroir (35) pour couper le moteur (43) au cours de la course vers la position préparatoire (b) et pour mettre en oeuvre le moteur (43) pendant la course de travail, ainsi que par un limiteur de pression (31) qui est conecté pendant la course de mise en position préparatoire, ce limiteur étant coupé pendant la course de travail.

FIG. 1

FIG. 2

FIG. 4

FIG. 3